# FASCICULE DE BREVET EUROPEEN

(11) **EP 3 270 237 B1**
(45) Date de publication et mention de la délivrance du brevet: **07.11.2018**
(21) Numéro de dépôt: 16179618.0
(22) Date de dépôt: 15.07.2016
(51) Int. Cl.: G04B 45/00, G02B 27/28, G04B 19/04, G04B 19/247, G02B 5/30

(54) **OBJET PORTABLE COMPRENANT UN DISPOSITIF D'AFFICHAGE D'AU MOINS UNE INFORMATION VUE À TRAVERS UNE LAME RETARD**
TRAGBARER GEGENSTAND, DER EINE VORRICHTUNG ZUM ANZEIGEN MINDESTENS EINER INFORMATION UMFASST, DIE ÜBER EINE VERZÖGERUNGSPLATTE SICHTBAR WIRD
PORTABLE OBJECT INCLUDING A DEVICE FOR DISPLAYING AT LEAST ONE ITEM OF INFORMATION VIEWED THROUGH A WAVE PLATE

(30) Priorité: 13.07.2016 EP 16179342
(43) Date de publication de la demande: 17.01.2018
(73) Titulaire: The Swatch Group Research and Development Ltd., 2074 Marin (CH)
(72) Inventeur: Tortora, Pierpasquale, 2000 Neuchâtel (CH)
(74) Mandataire: Supper, Marc

(56) Documents cités:
- EP-A1- 1 582 894
- CN-A- 102 722 034
- JP-A- S61 239 189
- US-A- 2 427 896
- US-A- 2 603 129
- US-A1- 2006 120 222
- Douglas Hansen ET AL: "The Display Applications and Physics of the ProFlux(TM) Wire Grid Polarizer", SID 02 DIGEST, 1 janvier 2002 (2002-01-01), pages 730-733, XP055342415, Extrait de l'Internet: URL:http://moxtek.com/wp-content/uploads/p dfs/The-Display-Applications-and-Physics-o f-the-ProFlux.pdf [extrait le 2017-02-06]

## Description

### Domaine technique de l'invention

La présente invention concerne un objet portable comprenant un dispositif d'affichage d'au moins une information, cette information étant vue à travers une lame à retard. L'invention concerne en particulier un objet portable comprenant un dispositif d'affichage d'au moins une information muni d'un guichet. L'invention concerne plus particulièrement encore un objet portable, par exemple une montre-bracelet, muni d'un cadran agencé pour afficher au moins une information.

### Arrière-plan technologique de l'invention

Les polariseurs à grilles de fils, mieux connus sous leur dénomination anglo-saxonne Wire Grid Polarisers ou WGP, sont des dispositifs optiques qui sont agencés pour permettre de polariser linéairement la lumière. Ces polariseurs à grilles de fils que, pour des raisons de commodité, nous désignerons par la suite par l'expression polariseurs WGP, comprennent une rangée de lignes métalliques parallèles entre elles qui ont pour fonction de réfléchir celle des composantes d'une onde lumineuse qui oscille selon une direction parallèle à ces lignes métalliques. Pour que l'effet de polarisation de la lumière soit possible, il faut que l'espacement entre ces lignes métalliques ainsi que l'épaisseur de ces lignes soient inférieurs à la longueur d'onde de la lumière qui tombe sur de tels polariseurs WGP. Dans le cas de la lumière visible, cette contrainte conduit à des espacements et à des épaisseurs de lignes de l'ordre de quelques centaines de nanomètres. Bien qu'il s'agisse de dimensions très faibles, avec les techniques de nano-structuration dont on dispose aujourd'hui, il est possible de fabriquer des polariseurs à grilles de fils pour le spectre visible de la lumière. Parmi les techniques de fabrication disponibles, on peut citer, entres autres, la lithographie par interférence laser, la lithographie multi-photonique en absence de masque ou bien encore la photolithographie conventionnelle par masquage.

Les lames à retard, quant à elles, sont des dispositifs optiques transparents réalisés au moyen d'un matériau biréfringent tel que du quartz ou du saphir dont la forme est celle d'une lame à faces parallèles. Ces lames à retard de phase sont également connues sous leur dénomination anglo-saxonne « wave plate ».

Un matériau biréfringent est un matériau anisotrope qui présente un axe privilégié appelé axe optique. La lumière qui se propage selon l'axe optique d'un matériau biréfringent ne subit pas de phénomène de biréfringence. La plupart des lames à retard sont taillées dans un cristal de façon que l'axe optique soit parallèle aux faces de la lame. La polarisation de la lumière peut être décomposée en deux composantes qui ne se propagent pas à la même vitesse selon que la composante considérée est parallèle ou perpendiculaire à l'axe optique de la lame. Cela permet de définir deux axes particuliers de la lame : un axe lent et un axe rapide. Une lame à retard permet donc de retarder l'une des composantes de la lumière par rapport à l'autre, c'est-à-dire de provoquer un déphasage. Ce déphasage est fonction du matériau utilisé, de l'épaisseur de la lame et de la longueur d'onde de l'onde lumineuse considérée. Une lame demi-onde est un exemple particulier de lame retard qui permet d'introduire un déphasage de 180° et un retard d'une moitié de longueur d'onde entre l'axe de biréfringence lent et l'axe de biréfringence rapide de la lame. Ainsi, si la direction de polarisation d'une lumière polarisée linéairement fait un angle α avec l'axe rapide d'une lame demi-onde, la lumière sortira polarisée linéairement de la lame avec sa direction de polarisation formant un angle 2α par rapport à sa direction de polarisation de départ. Dans le cas d'une lame demi-onde dont l'axe rapide est orienté à 45° par rapport à une onde lumineuse polarisée rectilignement, l'onde lumineuse sortira avec une polarisation linéaire perpendiculaire à celle de départ.

Le document US 2,603,129 A divulgue un dispositif d'affichage au-dessus duquel est agencé un premier polariseur à grille de fils comprenant une pluralité de lignes qui rayonnent à partir d'un centre du premier polariseur à grille de fils, et un second polariseur à grille de fils qui comprend une pluralité de lignes s'étendant en cercles concentriques à partir d'un centre du second polariseur à grille de fils. Une lame retard est disposée entre le premier polariseur à grille de fils et le second polariseur à grille de fils, la lame retard étant agencée au-dessus de l'information affichée par le dispositif d'affichage.

Le document CN 102 722 034 A divulgue un dispositif de diffraction de la lumière polarisée comprenant un polariseur à grille de fils métalliques. Un polariseur circulaire à grille de fils comporte une pluralité de lignes métalliques qui rayonnent à partir d'un cercle centré sur le centre du polariseur. Un autre polariseur circulaire à grilles de fils comporte une pluralité de lignes métalliques qui s'étendent circulairement de manière concentrique par rapport à un cercle centré sur le centre du polariseur.

Le document US 2,427,896 A divulgue des moyens indicateurs pour des instruments à cadran munis de caractères polarisant la lumière. L'aiguille est munie d'une tête en forme de disque et est agencée de sorte que, lorsque l'aiguille tourne, sa tête passe successivement au-dessus des caractères portés par le cadran. La tête de l'aiguille est réalisée en un matériau polarisant.

Le document JP S61 239189 A divulgue un mécanisme d'affichage pour une pièce d'horlogerie du type à aiguille. Une plaque de polarisation agencée de façon à recouvrir au moins la majeure partie d'une surface d'affichage est fixée sur la surface inférieure d'une glace de montre, et une plaque de polarisation laminée avec un corps aux propriétés optiques anisotropes est fixée sur un axe d'aiguille.

### Résumé de l'invention

La présente invention a pour but, par une combinaison judicieuse de polariseurs à grilles de fils et de lames retard, de procurer un nouveau type d'affichage d'une information qui soit à la fois dynamique et qui procure à un observateur la sensation que l'information flotte au-dessus de son support.

A cet effet, selon un premier mode de réalisation, la présente invention concerne un objet portable selon la revendication 1. Selon encore une autre caractéristique de réalisation de l'invention, le dispositif d'affichage d'informations est un cadran de montre sous lequel se déplace un anneau de quantième.

Selon encore une autre caractéristique de l'invention, l'objet portable est une montre-bracelet.

Grâce à ces caractéristiques, lorsque l'utilisateur regarde le dispositif d'affichage dont est muni l'objet portable conforme à l'invention, il voit l'information affichée par le dispositif d'affichage à travers les premier et second polariseurs à grilles de fils et la lame retard. L'information est visible et semble s'étendre à distance du dispositif d'affichage qui la porte. Le reste du dispositif d'affichage, visible à travers les premier et second polariseurs à grilles de fils seulement, présente un aspect opaque métallique. Lorsque l'utilisateur regarde l'objet portable, il peut voir l'information affichée par le dispositif d'affichage grâce au fait que, à l'échelle nanométrique des lignes des premier et second polariseurs, les lignes du premier polariseur forment localement sensiblement un angle droit avec les lignes du second polariseur. Ainsi, la lumière qui est naturellement polarisée selon deux directions orthogonales peut être transmise ou réfléchie avec un contraste d'affichage maximal.

De préférence, la lame retard est une lame retard demi-onde. De préférence encore, l'axe optique de la lame demi-onde forme, à l'échelle nanométrique, un angle de 45° avec les lignes métalliques des premier et second polariseurs à grilles de fils aux endroits où ces lignes se coupent.

Selon un second mode de réalisation, la présente invention concerne un objet portable selon la revendication 2. Selon un mode de réalisation qui n'est pas couvert par les revendications, un organe mobile comprend au moins une aiguille qui tourne au-dessus du dispositif d'affichage.

Selon une caractéristique complémentaire de réalisation de l'invention, l'objet portable est une montre-bracelet et le dispositif d'affichage d'informations est un cadran sur lequel sont reportés des index horaires.

La lame retard est préférentiellement une lame retard demi-onde dont l'axe optique forme, à l'échelle nanométrique, un angle de 45° avec les lignes métalliques des premier et second polariseurs à grilles de fils aux endroits où ces lignes métalliques se coupent. Selon un mode de réalisation qui n'est pas couvert par les revendications, grâce à ces autres caractéristiques, l'utilisateur, lorsqu'il regarde l'objet portable et que l'aiguille se trouve dans son champ de vision, voit l'information au-dessus de laquelle se trouve la lame demi-onde portée par l'aiguille qui semble se détacher du dispositif d'affichage qui la porte. Le restant du dispositif d'affichage présente un aspect métallique opaque.

### Brève description des figures

D'autres caractéristiques et avantages de la présente invention ressortiront plus clairement de la description détaillée qui suit de deux exemples de réalisation d'un objet portable conforme à l'invention, ces exemples étant donnés à titre purement illustratif et non limitatif seulement en liaison avec le dessin annexé sur lequel :
- la figure 1 est une vue de dessus d'un premier polariseur à grille de fils comprenant une pluralité de lignes qui rayonnent à partir d'un centre du premier polariseur à grille de fils ;
- la figure 2 est une vue de dessus d'un second polariseur à grille de fils comprenant une pluralité de lignes qui s'étendent en cercles concentriques à partir d'un centre du second polariseur à grille de fils ;
- la figure 3 est une vue de dessus du polariseur à grille de fils de la figure 1 au-dessus duquel est disposé le polariseur à grille de fils de la figure 2, cette figure permettant d'apprécier que, localement, à l'échelle nanométrique, les lignes du premier polariseur forment sensiblement un angle droit avec les lignes du second polariseur ;
- la figure 4 est une vue schématique de dessus d'un cadran de montre percé d'un guichet à travers lequel est visible une information de date ;
- la figure 5 est une vue schématique en élévation du cadran de la figure 4 sous lequel est agencé un anneau de quantième et au-dessus duquel sont successivement disposés un polariseur à grille de fils dont les lignes s'étendent radialement et un polariseur à grille de fils dont les lignes sont des cercles concentriques, une lame demi-onde étant agencée entre les deux polariseurs ;
- les figures 6A à 6C montrent à gauche l'aspect d'un cadran vu de dessus et à droite l'empilement progressif des composants du dispositif d'affichage qui équipe un objet portable selon un mode de réalisation qui n'est pas couvert par les revendications ;
- la figure 6D est une vue de détail de la région entourée d'un cercle sur la figure 6C sur laquelle est visible un index horaire vu à travers les premier et second polariseurs à grilles de fils et la lame retard demi-onde ;
- la figure 7A est une vue de dessus d'une boîte d'un objet portable dans laquelle est logé l'empilement des composants du dispositif d'affichage selon un mode de réalisation qui n'est pas couvert par les revendications ;
- la figure 7B est une vue de détail de la région entourée d'un cercle sur la figure 7A sur laquelle est visible un index horaire vu à travers les premier et second polariseurs à grilles de fils et la lame retard demi-onde ;
- les figures 8A et 8B représentent schématiquement le parcours de la lumière à travers l'empilement de la figure 6C, et
- la figure 9 est une vue en élévation d'une variante de réalisation du dispositif d'affichage qui équipe l'objet portable, cette variante n'étant pas couverte par les revendications.

### Description détaillée d'un mode de réalisation de l'invention

La présente invention procède de l'idée générale inventive qui consiste à procurer des polariseurs à grilles de fils qui permettent de voir des informations de manière originale et avec un très bon contraste à travers une lame retard qui, selon le mode de construction considéré, peut être fixe ou animée d'un mouvement tournant. Pour cela, l'agencement des polariseurs à grilles de fils avec des lignes qui rayonnent et des lignes circulaires concentriques permet d'avoir des lignes sensiblement perpendiculaires entre elles quelle que soit la région du dispositif d'affichage que l'on considère.

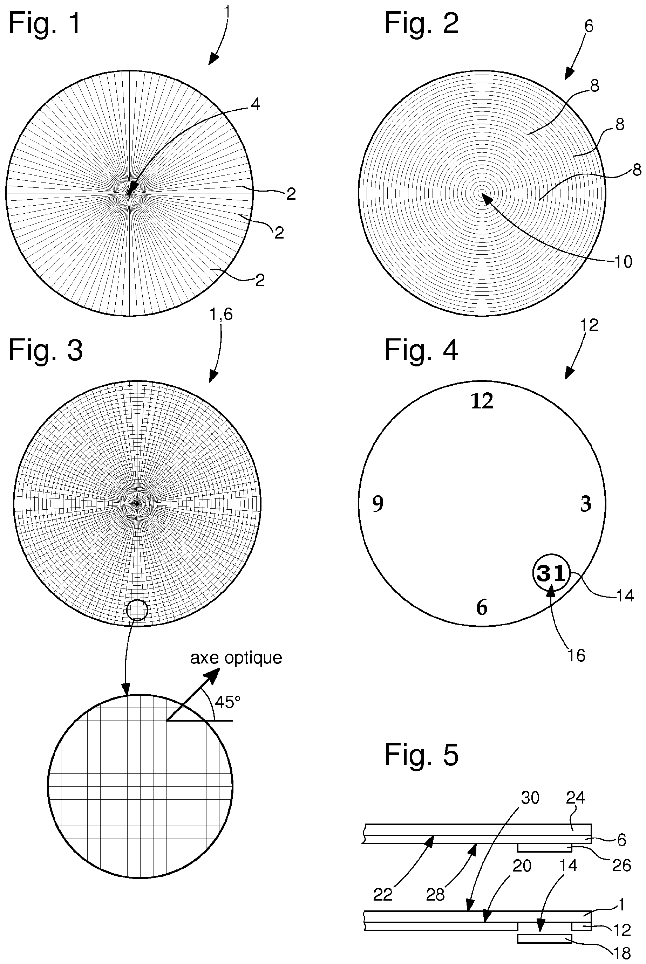

La figure 1 est une vue de dessus d'un premier polariseur à grille de fils selon l'invention. Désigné dans son ensemble par la référence numérique générale 1, ce premier polariseur à grille de fils comprend une pluralité de lignes métalliques 2 qui rayonnent à partir d'un centre 4 du premier polariseur à grille de fils 1. L'espacement entre ces lignes métalliques 2 ainsi que l'épaisseur de ces lignes 2 doivent être inférieurs à la longueur d'onde de la lumière qui tombe sur un tel polariseur à grille de fils 1. Dans le cas de la lumière visible, cette contrainte conduit à des espacements et à des épaisseurs de lignes de l'ordre de quelques centaines de nanomètres.

La figure 2 est une vue de dessus d'un second polariseur à grille de fils selon l'invention. Désigné dans son ensemble par la référence numérique générale 6, ce second polariseur à grille de fils comprend une pluralité de lignes métalliques 8 qui s'étendent en cercles concentriques à partir d'un centre 10 du second polariseur à grille de fils 6. De même que dans le cas du premier polariseur à grille de fils 1, l'espacement entre les lignes métalliques 8 du second polariseur à grille de fils 6 ainsi que l'épaisseur de ces lignes 8 doivent être inférieurs à la longueur d'onde de la lumière qui tombe sur un tel polariseur à grille de fils 6. Dans le cas de la lumière visible, cette contrainte conduit à des espacements et à des épaisseurs de lignes de l'ordre de quelques centaines de nanomètres.

La figure 3 est une vue de dessus du polariseur à grille de fils 1 de la figure 1 au-dessus duquel est disposé le polariseur à grille de fils 6 de la figure 2. Cette figure permet d'apprécier que, localement, à l'échelle nanométrique, les lignes métalliques 2 du premier polariseur à grille de fils 1 forment sensiblement un angle droit avec les lignes métalliques 8 du second polariseur à grille de fil 6.

La figure 4 est une vue schématique de dessus d'un cadran 12 percé d'un guichet 14 à travers lequel est visible une information de date 16.

La figure 5 est une vue schématique en élévation du cadran 12 de la figure 4 sous lequel est agencé un anneau, par exemple de quantième 18, qui porte les indications de date de 1 à 31. Cet anneau de quantième 18 est agencé pour pivoter chaque jour d'un trente-et-unième de tour de façon à faire apparaître l'indication de quantième du jour considéré à travers le guichet 14 ménagé dans le cadran 12.

Un premier polariseur à grille de fils 1 dont les lignes métalliques 2 rayonnent à partir du centre 4 de ce premier polariseur à grille de fils 1 est fixé sur une surface supérieure 20 du cadran 12, de façon à recouvrir le guichet 14 à travers lequel apparaissent les indications de date 16.

Un second polariseur à grille de fils 6 dont les lignes métalliques 8 s'étendent selon des cercles concentriques depuis le centre 10 de ce second polariseur à grille de fils 6 est disposé au-dessus du premier polariseur à grille de fils 1 et du guichet 14. De préférence, le second polariseur à grille de fils 6 est fixé sur une surface inférieure 22 d'une glace 24 qui recouvre le cadran 12.

Dans l'exemple qui vient d'être décrit, le second polariseur à grille de fils 6 est disposé au-dessus du premier polariseur à grille de fils 1, qui lui-même est disposé au-dessus du cadran 12. Il va de soi que l'ordre de cet empilement pourrait être modifié et que l'on pourrait disposer le second polariseur à grille de fils 6 au-dessus du cadran 12, et le premier polariseur à grille de fils 1 au-dessus du second polariseur à grille de fils 6.

Finalement, une lame retard demi-onde 26 est disposée entre le premier polariseur à grille de fils 1 et le second polariseur à grille de fils 6. Dans l'exemple illustré à la figure 5, la lame retard demi-onde 26 est fixée sur une surface inférieure 28 du second polariseur à grille de fils 6. Il va de soi cependant que la lame retard demi-onde 26 pourrait être fixée sur une surface supérieure 30 du premier polariseur à grille de fils 1. Préférentiellement, l'axe optique de la lame retard demi-onde 26 est orienté à 45° par rapport aux lignes métalliques 2 et 8 des premier et second polariseurs à grilles de fils 1 et 6 aux endroits où ces lignes se coupent.

Grâce à ces caractéristiques, on voit de manière originale et avec un très bon contraste l'indication de quantième 16 qui semble détachée de l'anneau de quantième 18 qui supporte cette indication.

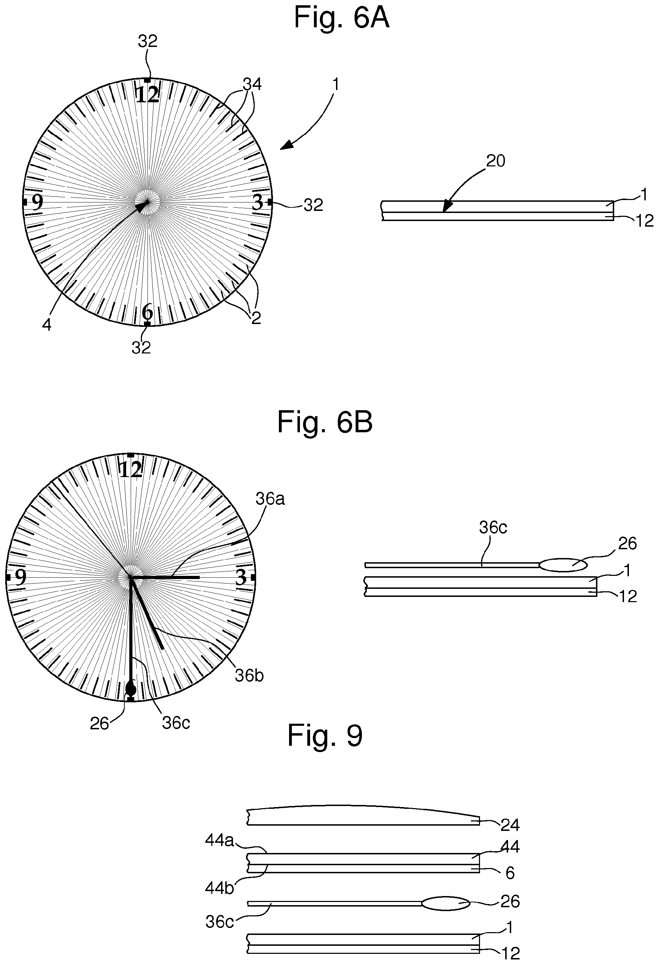

Les figures 6A à 6D montrent à gauche l'aspect d'un cadran vu de dessus et à droite l'empilement progressif des composants du dispositif d'affichage qui équipe un objet portable selon un mode de réalisation qui n'est pas couvert par les revendications.

La figure 6A montre respectivement vue de dessus (partie gauche de la figure 6A) et en élévation (partie droite de la figure 6A) une autre forme d'exécution du cadran 12 sur lequel sont reportés les chiffres des heures 32 et des index horaires 34. Un premier polariseur à grille de fils 1 dont les lignes métalliques 2 rayonnent à partir du centre 4 de ce premier polariseur à grille de fils 1 est fixé sur la surface supérieure 20 du cadran 12, de façon à recouvrir les chiffres des heures et les index horaires.

Comme visible sur la figure 6B, un jeu d'aiguilles des heures 36a, des minutes 36b et des secondes 36c se déplace au-dessus et à faible distance du cadran 12. En tournant, le jeu d'aiguilles 36a, 36b, 36c balaie la surface 20 du cadran 12. Comme il ressort également de la figure 6B, l'une au moins des trois aiguilles 36a, 36b, 36c, en l'occurrence l'aiguille des secondes 36c, est munie à son extrémité libre d'une lame retard demi-onde 26 qui est agencée de façon à passer au-dessus des chiffres des heures et des index horaires au fur et à mesure que l'aiguille des secondes 36c se déplace au-dessus du cadran 12.

Bien entendu, cet exemple de réalisation est donné à titre purement illustratif seulement et on comprendra qu'en fonction de l'endroit de la surface 20 du cadran 12 où sont reportées les indications que l'on souhaite visualiser, les lames retard demi-onde seront agencées en un endroit approprié de la longueur des aiguilles, de façon à passer au-dessus des chiffres des heures, des index horaires ou de toute autre information reportée à la surface du cadran que l'on souhaite visualiser grâce au dispositif. De même, la forme de la lame demi-onde peut-être adaptée à la forme de l'indication à afficher, par exemple pour différencier l'indication des heures de l'indication des minutes.

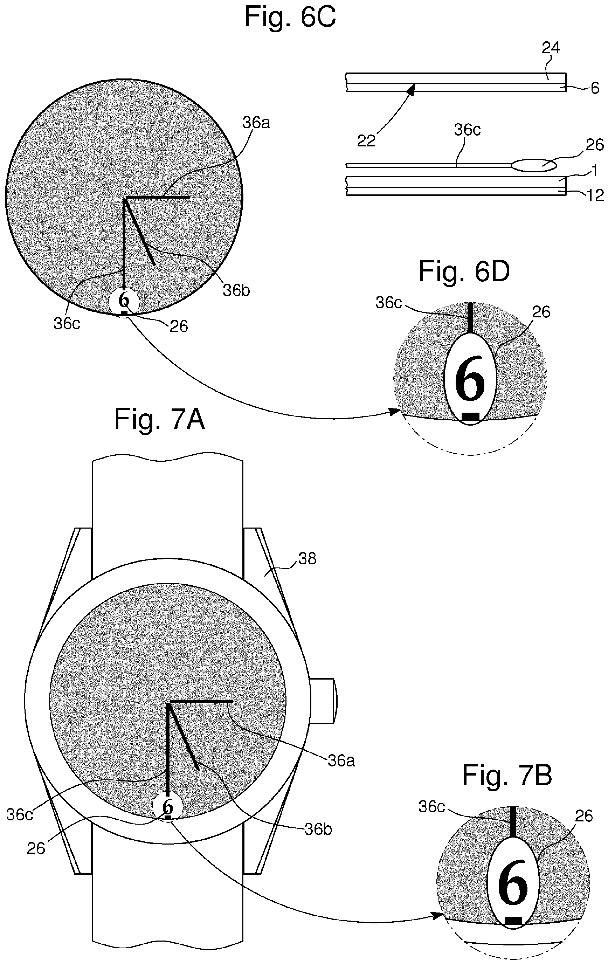

Finalement, à la figure 6C, on voit qu'un second polariseur à grille de fils 6 dont les lignes métalliques 8 s'étendent selon des cercles concentriques depuis le centre 10 de ce second polariseur à grille de fils 6 est fixé sur la surface inférieure 22 de la glace 24 qui recouvre le cadran 12.

Il va de soi que l'ordre de cet empilement pourrait être modifié et que l'on pourrait fixer le second polariseur à grille de fils 6 sur la surface supérieure 20 du cadran 12, et le premier polariseur à grille de fils 1 contre la surface inférieure 22 de la glace 24.

On notera également que, quelle que soit la position de la lame retard demi-onde 26 par rapport au cadran 12, l'axe optique de la lame retard demi-onde 26 est orienté à 45° par rapport aux lignes métalliques 2 et 8 des premier et second polariseurs à grilles de fils 1 et 6 aux endroits où ces lignes se coupent. Ainsi, comme visible sur la figure 6D, l'information (ici, un index horaire) vue à travers la lame retard demi-onde 26 et les premier et second polariseurs à grilles de fils 1 et 6 semble se détacher du cadran 12 sur lequel cette information est reportée et est perceptible avec un excellent contraste, tandis que le reste de la surface du cadran 12 présente un aspect métallique.

L'empilement décrit ci-dessus est logé dans une boîte 38 d'un objet portable comme une pièce d'horlogerie (figure 7A). La figure 7B est analogue à la figure 6D et montre l'aspect sous lequel l'information située entre les premier et second polariseurs 1, 6, sous la lame retard demi-onde 26, apparaît à l'utilisateur.

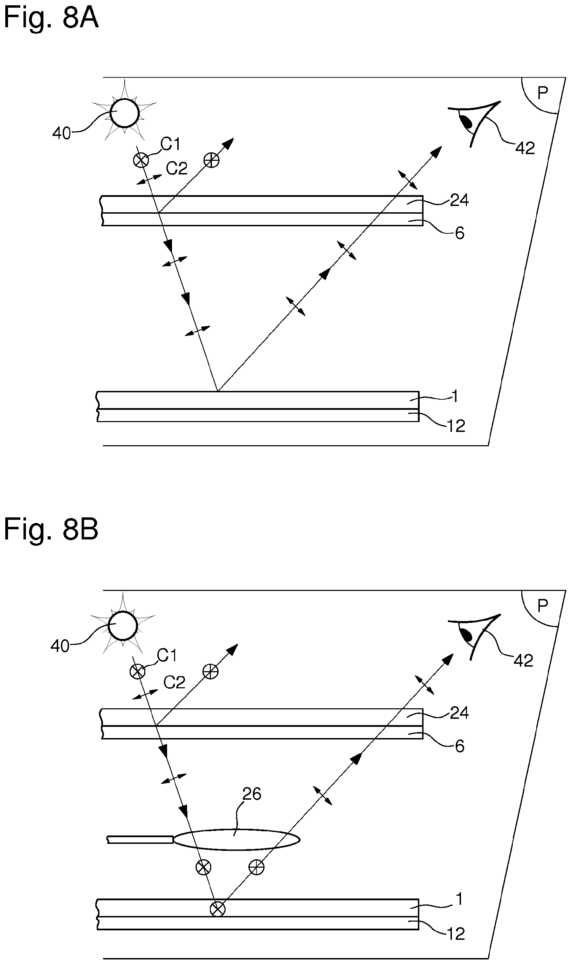

Le fonctionnement de cet empilement dans lequel une lame retard demi-onde se déplace en tournant autour du centre d'un cadran entre deux polariseurs à grilles de fils dont les lignes métalliques s'étendent respectivement de manière radiale par rapport au centre du premier polariseur, et de manière circulaire concentrique par rapport au centre du second polariseur, va être décrit en liaison avec les figures 8A et 8B qui représentent schématiquement le parcours de la lumière à travers l'empilement de la figure 6C.

Les figures 8A et 8B représentent schématiquement le parcours de la lumière à travers l'empilement de la figure 6C. Par souci de simplification, on va décrire dans ce qui suit le comportement d'un faisceau 40 de lumière naturelle polarisée circulairement et qui se propage dans un plan d'incidence P correspondant au plan de la coupe illustrée sur les figures 8A et 8B.

Dans le cas représenté à la figure 8A, aucune des aiguilles 36a, 36b, 36c ne se trouve dans le plan d'incidence P, de sorte que le faisceau de lumière 40 ne rencontre pas de lame retard demi-onde 26 sur son trajet. Ainsi, lorsque le faisceau de lumière naturelle 40, provenant de l'extérieur, tombe sur le second polariseur à grille de fils 6 dont les lignes métalliques 8 s'étendent en cercles concentriques à partir du centre 10 de ce polariseur 6, la composante C1 du faisceau de lumière 40 qui est perpendiculaire au plan d'incidence P est réfléchie par le second polariseur à grille de fils 6, tandis que la composante C2 du faisceau de lumière 40 qui est parallèle au plan d'incidence P est transmise par le second polariseur à grille de fils 6 sans modification. Ensuite, lorsque la composante C2 du faisceau de lumière 40 qui est parallèle au plan d'incidence P tombe sur le premier polariseur à grille de fils 1 dont les lignes métalliques 2 rayonnent à partir du centre de ce polariseur 1, cette composante C2 est réfléchie par le premier polariseur à grille de fils 1, puis traverse le second polariseur 6 et atteint l'observateur 42. Ainsi, la composante C2 du faisceau de lumière naturelle 40 est réfléchie par le premier polariseur à grille de fils 1 avant d'atteindre le cadran 12, de sorte qu'elle n'éclaire pas ce dernier qui reste invisible. Cette zone du cadran 12 vue par l'observateur 42 selon le plan d'incidence P apparaît donc opaque avec un éclat métallique.

On comprend qu'afin que la composante C2 du faisceau de lumière naturelle 40 qui est transmise sans modification par le second polariseur à grille de fils 6 soit également transmise (et non réfléchie) par le premier polariseur à grille de fils 1 et puisse éclairer le cadran 12, il faut que la direction de polarisation de la composante C2 du faisceau de lumière 40 soit tournée de 90°. Ceci est le rôle des lames retard demi-onde comme on va le comprendre à la lecture de ce qui suit.

Dans le cas représenté à la figure 8B, une des aiguilles 36a, 36b, 36c se trouve dans le plan d'incidence P, de sorte que le faisceau de lumière 40 rencontre une lame retard demi-onde 26 sur son trajet. Ainsi, lorsque le faisceau de lumière naturelle 40, provenant de l'extérieur, tombe sur le second polariseur à grille de fils 6 dont les lignes métalliques 8 s'étendent en cercles concentriques à partir du centre 10 de ce polariseur 6, la composante C1 du faisceau de lumière 40 qui est perpendiculaire au plan d'incidence P est réfléchie par le second polariseur à grille de fils 6, tandis que la composante C2 du faisceau de lumière 40 qui est parallèle au plan d'incidence P est transmise par le second polariseur à grille de fils 6 sans modification. Ensuite, cette composante C2 du faisceau de lumière 40 traverse la lame retard demi-onde 26 de l'aiguille qui se trouve dans le plan d'incidence P et sa direction de polarisation est tournée de 90°. Par conséquent, lorsque la composante C2 du faisceau de lumière 40 tombe sur le premier polariseur à grille de fils 1, elle est transmise par ce dernier et vient éclairer le cadran 12 sur lequel elle se réfléchit. Sur le chemin retour, la composante C2 du faisceau de lumière 40 traverse à nouveau le premier polariseur à grille de fils 1 sans modification, puis est encore une fois tournée de 90° lorsqu'elle traverse la lame demi-onde 26, de sorte qu'elle peut traverser le second polariseur 6 et atteindre l'observateur 42. L'observateur 42 perçoit donc le cadran 12 et l'inscription que porte cette zone du cadran 12 qui se trouve dans le plan d'incidence P du faisceau de lumière 40. Pour l'observateur 42, cette inscription semble ainsi être détachée du cadran 12 et se situer entre le cadran 12 et la glace 24.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées.

On notera en particulier que, selon les effets optiques recherchés, il peut être envisagé que la lame retard introduise un retard différent d'une demi-longueur d'onde et que son axe optique, à l'échelle nanométrique, forme un angle différent de 45° avec les lignes métalliques des premier et second polariseurs à grilles de fils.

L'invention concerne également un polariseur à grille de fils comportant une pluralité de lignes métalliques qui rayonnent à partir d'un centre de ce polariseur à grille de fils.

L'invention concerne également un polariseur à grille de fils qui comporte une pluralité de lignes métalliques s'étendant en cercles concentriques à partir d'un centre de ce polariseur à grille de fils. Dans l'exemple qui n'est pas couvert par les revendications décrit ci-dessus, l'organe mobile est une aiguille qui, en tournant, balaie la surface du cadran et qui est munie d'une lame retard. Selon une variante, l'organe mobile comprend au moins un disque qui tourne de la même façon qu'une aiguille. Ce disque, de préférence transparent, peut porter un repère pointant sur l'information à afficher. Le disque porte une lame demi-onde qui vient se positionner au-dessus de l'information sur laquelle pointe le repère.

La présente invention a été décrite dans le cadre d'une application dans le domaine de la lumière visible. Il va néanmoins de soi qu'en adaptant la largeur et l'espacement des lignes métalliques des polariseurs à grilles de fils selon l'invention, des applications en dehors du spectre de la lumière visible, dans les domaines de l'ultraviolet et de l'infrarouge, peuvent être envisagées.

On notera d'autre part que la glace 24 dont il a été question ci-dessus peut être la glace qui sert à fermer par le haut la boîte 38 de l'objet portable selon l'invention comme une pièce d'horlogerie. Cependant, selon une variante illustrée à la figure 9, le premier polariseur 1, ou bien le second polariseur 6 suivant l'ordre dans lequel les premier et second polariseurs 1, 6 sont empilés, peut être fixé sur une face inférieure ou supérieure d'un support transparent 44 disposé au-dessus des aiguilles, entre le cadran 12 et la glace 24. De la sorte, ce support transparent 44 peut avoir ses grandes faces 44a, 44b parallèles planes, de façon à ne pas introduire de déformations optiques de l'image affichée, et la glace 24 qui ferme l'objet portable par le dessus peut être de forme quelconque, par exemple bombée, sans que cela n'affecte la géométrie de l'image affichée.

### Nomenclature

1. Premier polariseur à grille de fils
2. Lignes métalliques
4. Centre
6. Second polariseur à grille de fils
8. Lignes métalliques
10. Centre
12. Cadran
14. Guichet
16. Indications de date
18. Anneau de quantième
20. Surface supérieure
22. Surface inférieure
24. Glace
26. Lame retard demi-onde
28. Surface inférieure
30. Surface supérieure
32. Chiffres des heures
34. Index horaires
36a. Aiguilles des heures
36b. Aiguille des minutes
36c. Aiguille des secondes
38. Boîte
40. Faisceau de lumière naturelle
42. Observateur
44. Support transparent
44a, 44b. Grandes faces

## Revendications

1. Objet portable comprenant un cadran (12) muni d'un guichet (14) à travers lequel est visible au moins une information (16) qui est portée par un support (18) agencé sous le cadran (12), et au-dessus duquel est agencé :
• un premier polariseur à grille de fils (1) de la lumière visible, ce premier polariseur à grille de fils (1) comprenant une pluralité de lignes métalliques (2) qui rayonnent à partir d'un centre (4) du premier polariseur à grille de fils (1),
• et un second polariseur à grille de fils (6) de la lumière visible qui comprend une pluralité de lignes métalliques (8) s'étendant en cercles concentriques à partir d'un centre (10) du second polariseur à grille de fils (6),
une lame retard étant disposée entre le premier polariseur à grille de fils (1) et le second polariseur à grille de fils (6), la lame retard (26) étant agencée au-dessus de l'information (16) affichée dans le guichet (14) agencé dans le cadran (12)le premier polariseur à grille de fils (1) étant solidarisé sur une surface supérieure (20) du cadran (12), et la lame retard étant solidarisée sur une surface inférieure (28) du second polariseur à grille de fils (6).

2. Objet portable comprenant un cadran (12) muni d'un guichet (14) à travers lequel est visible au moins une information (16) qui est portée par un support (18) agencé sous le cadran (12), et au-dessus duquel est agencé :
• un premier polariseur à grille de fils (1) de la lumière visible, ce premier polariseur à grille de fils (1) comprenant une pluralité de lignes métalliques (2) qui rayonnent à partir d'un centre (4) du premier polariseur à grille de fils (1),
• et un second polariseur à grille de fils (6) de la lumière visible qui comprend une pluralité de lignes métalliques (8) s'étendant en cercles concentriques à partir d'un centre (10) du second polariseur à grille de fils (6),
une lame retard étant disposée entre le premier polariseur à grille de fils (1) et le second polariseur à grille de fils (6), la lame retard (26) étant agencée au-dessus de l'information (16) affichée dans le guichet (14) agencé dans le cadran (12), le second polariseur à grille de fils (6) étant solidarisé sur une surface supérieure (20) du cadran (12), et la lame retard étant solidarisée sur une surface inférieure (30) du premier polariseur à grille de fils (1).

3. Objet portable selon l'une des revendications 1 ou 2, **caractérisé en ce que** le support qui porte la au moins une information est un anneau de quantième (18) qui porte les indications de date de 1 à 31 et qui est agencé pour pivoter chaque jour d'un trente-et-unième de tour, de façon à faire apparaître l'indication de quantième du jour considéré à travers le guichet (14) ménagé dans le cadran (12).

4. Objet portable selon l'une des revendications 1 à 3, **caractérisé en ce qu'**il comprend une glace (24) qui recouvre le cadran (12).

5. Objet portable selon la revendication 4 lorsqu'elle dépend de l'une des revendications 1 ou 3, **caractérisé en ce que** le second polariseur à grille de fils (6) est fixé sur une surface inférieure (22) de la glace (24).

6. Objet portable selon la revendication 4 lorsqu'elle dépend de l'une des revendications 2 ou 3, **caractérisé en ce que** le premier polariseur à grille de fils (1) est fixé sur une surface inférieure (22) de la glace (24).

7. Objet portable selon l'une quelconque des revendications 1 à 6, **caractérisé en ce que** la lame retard est une lame retard demi-onde (26).

8. Objet portable selon la revendication 7, **caractérisé en ce que**, à une échelle nanométrique, la lame retard demi-onde (26) présente un axe optique orienté à 45° par rapport aux lignes métalliques (2 ; 8) des premier et second polariseurs à grilles de fils (1 ; 6).

9. Objet portable selon l'une des revendications 1 à 8, **caractérisé en ce qu'**il s'agit d'une montre-bracelet.

## Patentansprüche

1. Tragbarer Gegenstand, umfassend ein Zifferblatt (12), das mit einem Fenster (14) versehen ist, durch das mindestens eine Information (16) sichtbar ist, die von einem unter dem Zifferblatt (12) angeordneten Träger (18) getragen wird, über dem angeordnet ist:
- ein erster Drahtgitterpolarisator (1) für sichtbares Licht, wobei dieser erste Drahtgitterpolarisator (1) eine Mehrzahl von Metallleitungen (2) aufweist, die sich von einem Zentrum (4) des ersten Drahtgitterpolarisators (1) aus strahlenförmig erstrecken,
- und einen zweiten Drahtgitterpolarisator (6) für sichtbares Licht, der eine Mehrzahl von Metallleitungen (8) aufweist, die sich ausgehend von einem Zentrum (10) des zweiten Drahtgitterpolarisators (6) in konzentrischen Kreisen erstrecken,
wobei zwischen dem ersten Drahtgitterpolarisator (1) und dem zweiten Drahtgitterpolarisator (6) ein Verzögerungsplättchen angeordnet ist, wobei das Verzögerungsplättchen (26) über der Information (16) angeordnet ist, die durch das in dem Zifferblatt (12) angeordnete Fenster (14) angezeigt wird, wobei der erste Drahtgitterpolarisator (1) an einer oberen Oberfläche (20) des Zifferblatts (12) befestigt ist und das Verzögerungsplättchen an einer unteren Oberfläche (28) des zweiten Drahtgitterpolarisators (6) befestigt ist.

2. Tragbarer Gegenstand, umfassend ein Zifferblatt (12), das mit einem Fenster (14) versehen ist, durch das mindestens eine Information (16) sichtbar ist, die von einem unter dem Zifferblatt (12) angeordneten Träger (18) getragen wird, und über dem angeordnet ist:
- ein erster Drahtgitterpolarisator (1) für sichtbares Licht, wobei dieser erste Drahtgitterpolarisator (1) eine Mehrzahl von Metallleitungen (2) aufweist, die sich von einem Zentrum (4) des ersten Drahtgitterpolarisators (1) aus strahlenförmig erstrecken,
- und ein zweiter Drahtgitterpolarisator (6) für sichtbares Licht, der eine Mehrzahl von Metallleitungen (8) aufweist, die sich ausgehend von einem Zentrum (10) des zweiten Drahtgitterpolarisators (6) in konzentrischen Kreisen erstrecken,
wobei zwischen dem ersten Drahtgitterpolarisator (1) und dem zweiten Drahtgitterpolarisator (6) ein Verzögerungsplättchen angeordnet ist, wobei das Verzögerungsplättchen (26) über der Information (16) angeordnet ist, die durch das in dem Zifferblatt (12) angeordnete Fenster (14) angezeigt wird, wobei der zweite Drahtgitterpolarisator (6) an einer oberen Oberfläche (20) des Zifferblatts (12) befestigt ist und das Verzögerungsplättchen an einer unteren Oberfläche (30) des ersten Drahtgitterpolarisators (1) befestigt ist.

3. Tragbarer Gegenstand nach einem der Ansprüche 1 oder 2, **dadurch gekennzeichnet, dass** der Träger, der die mindestens eine Information trägt, ein Datumsring (18) ist, der die Datumsangaben von 1 bis 31 trägt und der so angeordnet ist, dass er sich jeden Tag um eine einunddreißigstel Umdrehung dreht, derart, dass die Angabe des Monatstages erscheint, die durch das in dem Zifferblatt (12) ausgesparte Fenster (14) betrachtet wird.

4. Tragbarer Gegenstand nach einem der Ansprüche 1 bis 3, **dadurch gekennzeichnet, dass** er ein Glas (24) aufweist, das das Zifferblatt (12) abdeckt.

5. Tragbarer Gegenstand nach Anspruch 4, wenn abhängig von einem der Ansprüche 1 oder 3, **dadurch gekennzeichnet, dass** der zweite Drahtgitterpolarisator (6) an einer unteren Oberfläche (22) des Glases (24) befestigt ist.

6. Tragbarer Gegenstand nach Anspruch 4, wenn abhängig von einem der Ansprüche 2 oder 3, **dadurch gekennzeichnet, dass** der erste Drahtgitterpolarisator (1) an einer unteren Oberfläche (22) des Glases (24) befestigt ist.

7. Tragbarer Gegenstand nach einem der Ansprüche 1 bis 6, **dadurch gekennzeichnet, dass** das Verzögerungsplättchen ein Lambda-Halbe-Verzögerungsplättchen (26) ist.

8. Tragbarer Gegenstand nach Anspruch 7, **dadurch gekennzeichnet, dass** im Nanometermaßstab das Lambda-Halbe-Verzögerungsplättchen (26) eine optische Achse aufweist, die in einem Winkel von 45° in Bezug auf die Metallleitungen (2; 8) des ersten und des zweiten Drahtgitterpolarisators (1; 6) ausgerichtet ist.

9. Tragbarer Gegenstand nach einem der Ansprüche 1 bis 8, **dadurch gekennzeichnet, dass** es sich um eine Armbanduhr handelt.

## Claims

1. Portable object comprising a dial (12) provided with an aperture (14) through which is visible at least one item of information (16) which is provided on a support arranged below the dial (12), and above which is arranged:
• a first wire grid polarizer (1) of the visible light, this first wire grid polarizer (1) including a plurality of metallic wires (2) which radiate from a center (4) of the first wire grid polarizer (1),
• and a second wire grid polarizer (6) of the visible light including a plurality of metallic wires (8) which extend in concentric circles from a center (10) of the second wire grid polarizer (6),
a wave plate being arranged between the first wire grid polarizer (1) and the second wire grid polarizer (6), the wave plate (26) being arranged above the item of information (16) displayed in the aperture (14) arranged in the dial (12), the first wire grid polarizer (1) being adhered on a top surface (20) of the dial (12), and the wave plate being adhered to a lower surface (28) of the second wire grid polarizer (6).

2. Portable object comprising a dial (12) provided with an aperture (14) through which is visible at least one item of information (16) which is provided on a support arranged below the dial (12), and above which is arranged:
• a first wire grid polarizer (1) of the visible light, this first wire grid polarizer (1) including a plurality of metallic wires (2) which radiate from a center (4) of the first wire grid polarizer (1),
• and a second wire grid polarizer (6) of the visible light including a plurality of metallic wires (8) which extend in concentric circles from a center (10) of the second wire grid polarizer (6),
a wave plate being arranged between the first wire grid polarizer (1) and the second wire grid polarizer (6), the wave plate (26) being arranged above the item of information (16) displayed in the aperture (14) arranged in the dial (12), the second wire grid polarizer (6) being adhered on a top surface (20) of the dial (12), and the wave plate being adhered to a lower surface (30) of the second wire grid polarizer (6).

3. Portable object according to any of claims 1 or 2, **characterized in that** the support which supports the at least one item of information is a date ring (18) which supports the date indications 1 to 31 and which is arranged to turn each day by a thirty-first of a turn, so as to reveal the date indication of the given day through the aperture (14) arranged in the dial (12).

4. Portable object to any of claims 1 to 3, **characterized in that** it includes a crystal (24) covering the dial (12).

5. Portable object according to claim 4 depending from any of claims 1 to 3, **characterized in that** the second wire grid polarizer (6) is fixed to a lower surface (22) of the crystal (24).

6. Portable object according to claim 4 depending from any of claims 1 to 3, **characterized in that** the first wire grid polarizer (1) is fixed to a lower surface (22) of the crystal (24).

7. Portable object according to any of claims 1 to 6, **characterized in that** the wave plate is a half wave plate (26).

8. Portable object according to claim 6, **characterized in that**, at a nanometric scale, the half wave plate (26) has an optical axis oriented at 45° with respect to the metallic wires (2; 8) of the first and second wire grid polarizers (1; 6).

9. Portable object according to any of claims 1 to 8, **characterized in that** it is a wristwatch.
